# EUROPÄISCHE PATENTSCHRIFT

(11) **EP 0 558 874 B1**
(45) Veröffentlichungstag und Bekanntmachung des Hinweises auf die Patenterteilung: **24.05.1995**
(21) Anmeldenummer: 92810172.4
(22) Anmeldetag: 05.03.1992
(51) Int. Cl.: B22D 11/06, B23K 35/32

(54) **Verfahren und Vorrichtung zum Herstellen von Ringen aus einer Aktivhartlot-Legierung**
Method of and apparatus for producing rings of an active brazing alloy
Procédé et appareillage pour la fabrication d'anneaux en brasure active

(43) Veröffentlichungstag der Anmeldung: 08.09.1993
(73) Patentinhaber: ENDRESS + HAUSER GMBH + CO., D-79689 Maulburg (DE)
(72) Erfinder: Reimann, Peter, El. Ing. HTL, CH-4446 Buckten BL (CH); Breitenstein, Heinz, CH-4112 Bättwil SO (CH); Messmer, Stephan, CH-4102 Binningen BL (CH)
(74) Vertreter: Morstadt, Volker, Dipl.-Ing. c/o Endress + Hauser Flowtec AG

(56) Entgegenhaltungen:
- EP-A- 0 332 978
- H.H. LIEBERMANN 'Helical Glassy Alloy Ribbons: Fabrication and MagneticProperties' , MATERIAL SCIENCE AND ENGINEERING, 49 (1981)
- PATENT ABSTRACTS OF JAPAN vol. 9, no. 142 (M-388)(1865) 18. Juni 1985

## Beschreibung

Die Erfindung betrifft ein Verfahren zum Herstellen von gleichmäßig dicken Ringen aus einer Aktivhartlot-Legierung durch Melt-Spinning der flüssigen Legierung sowie eine Melt-Spinning-Vorrichtung zum Herstellen dieser Ringe.

Das Melt-Spinning-Verfahren dient zum Herstellen von Metallbändern, meist aus Legierungen, die, wenn sie auf andere Art und Weise als durch das Melt-Spinning-Verfahren hergestellt werden, spröde sind, durch es jedoch als duktile und damit mechanisch bearbeitbare Bänder hergestellt werden können, da sie wie Glas eine erstarrte Flüssigkeit sind und daher auch als metallische Gläser bezeichnet werden.

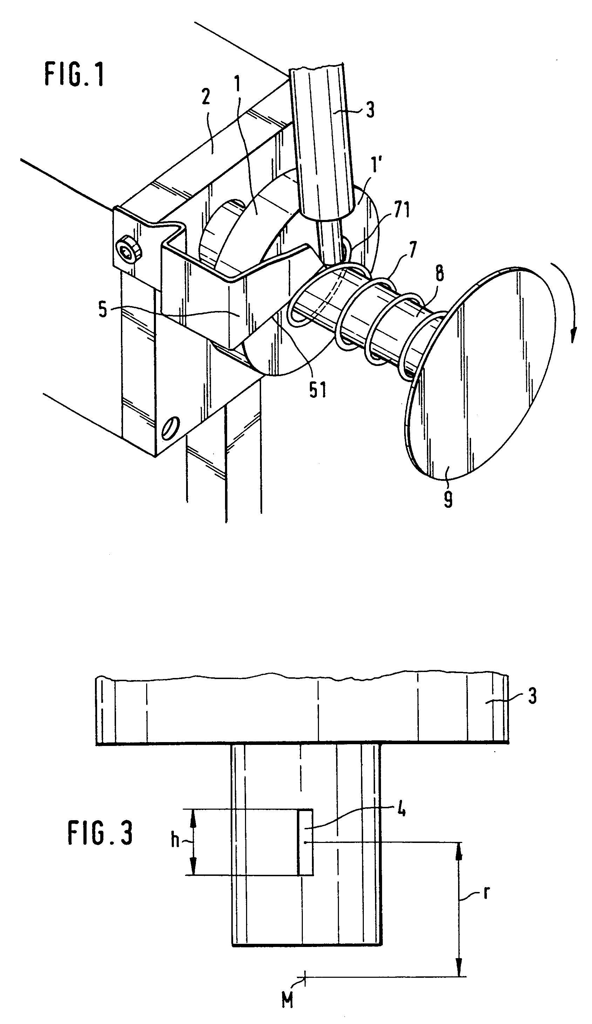

In dem Buch "Metallic Glasses - Papers presented at a Seminar of the Materials Science Division of the American Society for Metals, Sept. 18 and 19, 1976", American Society for Metals, Ohio, January 1978, Seiten 36 bis 38 ist in Verbindung mit Fig. 1 auf Seite 38 schematisch eine Vorrichtung zum Herstellen von Bändern metallischer Gläser gezeigt.

Dabei wird ein Strahl geschmolzener Legierung auf die Seitenfläche einer mit hoher Umfangsgeschwindigkeit rotierenden Metalltrommel großer Wärmeleitfähigkeit aus einem über ihr in einem etwa dem Metalltrommel-Durchmesser entsprechenden Abstand angeordneten Tiegel ausgepreßt. Das Band löst sich nach dem Erstarren der Schmelze von der Metalltrommel.

In der Zeitschrift "Materials Science and Engineering", Bd. 49, 1985, Seiten 185 bis 191 ist in Verbindung mit Fig. 1 auf Seite 185 ein Verfahren zum Herstellen einer Bandwendel aus einem metallischen Glas beschrieben. Dabei wird ein Strahl der verflüssigten Legierung unter einem von 90° abweichenden Winkel auf die Seitenfläche einer mit hoher Umfangsgeschwindigkeit rotierenden Metalltrommel großer Wärmeleitfähigkeit auftreffen gelassen und die entstehende Wendel nach dem Ablösen von der Metalltrommel um deren hintere, von der Auftreff-Seitenfläche abgekehrte Seitenfläche herum geführt.

Wie Versuche der Erfinder zeigten, besteht ein Hauptproblem bei der Herstellung der erwähnten Bandwendeln und demzufolge auch bei der Herstellung von daraus zu schneidenden Ringen, die gleichmäßig dick und breit sein sollen in folgendem: Es ist sicherzustellen, daß die einzelnen Windungen der Wendel während der sehr kurzen Zeit, in der die Legierungsmenge auf der Metalltrommel abgeschreckt wird, sich von der Metalltrommel löst und zur Wendel sich aufwickelt, durch plastische Verformung nicht überdehnt oder nicht miteinander verklebt werden und somit eine Art Bandknäuel entstünde, das nur schwierig in die einzelnen Ringe aufgetrennt werden könnte. Dieses Problem tritt insb. bei der Herstellung von Ringen aus einer ohne des Melt-Spinning-Verfahren an sich spröden Aktivhartlot-Legierung auf.

Die Lösung dieses Problems besteht daher einerseits in einem Verfahren zum Herstellen von gleichmäßig dicken und breiten Ringen aus einer Aktivhartlot-Legierung durch Melt-Spinning der flüssigen Legierung mit folgenden Schritten: Die Legierung wird in einem Tiegel mit einer seitlichen Öffnung verflüssigt, deren Höhe ungefähr gleich der Materialbreite der Ringe ist; die flüssige Legierung wird aus dem Tiegel auf die Seitenfläche einer im Abstand von etwa der Dicke der Ringe mit hoher Umfangsgeschwindigkeit rotierenden Metalltrommel großer Wärmeleitfähigkeit in einem etwa dem Durchmesser der Ringe entsprechenden radialen Abstand vom Trommelmittelpunkt ausgepreßt; nach etwa einer viertel bis dreiviertel Umdrehung der auf der Metalltrommel zum Ringmaterial erstarrten Aktivhartlot-Legierung wird es durch einen mechanischen Abweiser und einen vor diesem entgegen der Drehrichtung der Metalltrommel auf sie geblasenen Gasstrom von der Metalltrommel abgehoben und am Tiegel vorbeigeführt; die entstehende Ringwendel wird um einen als Aufwickeldorn dienenden seitlichkoaxialen Fortsatz der Metalltrommel geführt, der auf der Seite des Tiegels angeordnet ist und einen Endflansch sowie einen Durchmesser aufweist, der etwas kleiner als der Ringinnendurchmesser ist; und von der Ringwendel werden die Ringe abgeschnitten.

Die Lösung des genannten Problems besteht andererseits in einer Melt-Spinning-Vorrichtung zum Herstellen von gleichmäßig dicken Ringen aus einer Aktivhartlot-Legierung mit: einer mit hoher Umfangsgeschwindigkeit rotierenden Metalltrommel großer Wärmeleitfähigkeit; einem eine seitliche Öffnung aufweisenden Tiegel, deren Höhe ungefähr der Materialbreite der Ringe entspricht und die im Abstand von etwa der Dicke der Ringe neben der Seitenfläche der Metalltrommel und mit einem etwa dem Durchmesser der Ringe entsprechenden radialen Abstand von der Trommelachse angeordnet ist; einem mechanischen Abweiser, der um etwa 90° bis 270° versetzt gegenüber der Öffnung des Tiegels unmittelbar neben der Seitenfläche der Metalltrommel angeordnet ist; und einem auf der Seite des Tiegels angeordneten und als Aufwickeldorn für die entstehende Ringwendel dienenden seitlich-koaxialen Fortsatz der Metalltrommel, der einen Endflansch und einen Durchmesser aufweist, der etwas kleiner als der Ringinnendurchmesser ist.

Die Lösung des genannten Problems besteht andererseits ferner in einer Melt-Spinning-Vorrichtung zum Herstellen von gleichmäßig dicken Ringen aus einer Aktivhartlot-Legierung mit: einer mit hoher Umfangsgeschwindigkeit rotierenden Metalltrommel großer Wärmeleitfähigkeit; einem eine seitliche Öffnung aufweisenden Tiegel, deren Höhe ungefähr der Materialbreite der Ringe entspricht und die im Abstand von etwa der Dicke der Ringe neben der Seitenfläche der Metalltrommel und mit einem etwa dem Durchmesser der Ringe entsprechenden radialen Abstand von der Trommelachse angeordnet ist; einem um etwa 90° bis 270° gegenüber der Öffnung des Tiegels versetzt radial und parallel zur Seitenfläche der Metalltrommel verlaufenden gasführenden Rohr, das einen Längsschlitz aufweist, aus dem ein Gas tangential entgegen der Drehrichtung der Metalltrommel austritt, und einem auf der Seite des Tiegels angeordneten und als Aufwickeldorn für die entstehende Ringwendel dienenden seitlich-koaxialen Fortsatz der Metalltrommel, der einen Endflansch und einen Durchmesser aufweist, der etwas kleiner als der Ringinnendurchmesser ist.

Nach einer Ausgestaltung des Verfahrens der Erfindung erfolgt das Verflüssigen durch Erhitzen des Tiegels mittels Hochfrequenzenergie, z.B. indem der Tiegel in einer ihn umgebenden Spule angeordnet ist..

Nach einer anderen Ausgestaltung des Verfahrens der Erfindung ist die Aktivhartlot-Legierung ein ternäres Aktivhartlot auf der Basis einer aus 70 Atom% bis 85 Atom% Zirconium und 15 Atom% bis 30 Atom% Nickel bestehenden Zirconium/Nickel-Legierung, das zusätzlich zur Zirconium/Nickel-Legierung Titan enthält. Dabei hat vorzugsweise die Zirconium/Nickel-Legierung eine eutektikumsnahe Zusammensetzung, worunter ein Bereich um das Eutektikum (= 24 Atom% Nickel, 76 Atom% Zirconium) von ± 5 Atom% zu verstehen ist; insbesondere ist natürlich die eutektische Zirconium/Nickel-Legierung geeignet.

Nach einer Ausgestaltung der Vorrichtungen der Erfindung besteht der Tiegel vollständig aus einem hochwärmebeständigen und gut wärmeleitfähigen, nicht-metallischen Material, insb. aus hochdichtem Graphit oder Bornitrid.

Die erfindungsgemäß hergestellten Ringe werden bevorzugt bei Drucksensoren mit einem Grundkörper und einer Membran aus Keramik, insbesondere Aluminiumoxid-Keramik, vorzugsweise mit einer Reinheit von 96 Gew.%, verwendet, die unter Bildung einer Kammer in einem definierten Abstand parallel zueinander an ihrem Rande mittels eines solchen Aktivhartlot-Ringes thermisch zusammengefügt sind.

Die Erfindung und deren weitere Eigenschaften werden nun anhand der Figuren der Zeichnung näher erläutert, in der schematisch zwei Melt-Spinning-Vorrichtungen und als bevorzugtes Beispiel für die Anwendung der Aktivhartlot-Ringe der Aufbau eines kapazitiven Drucksensors dargestellt sind. In den Figuren sind gleiche Teile mit denselben Bezugszeichen versehen.
- Fig. 1 zeigt: schematisch in perspektivischer Ansicht eine erste Variante einer Melt-Spinning-Vorrichtung,
- Fig. 2 zeigt: schematisch in perspektivischer Ansicht eine zweite Variante einer Melt-Spinning-Vorrichtung,
- Fig. 3 zeigt: in vergrößerter Draufsicht die Seitenwand des Tiegels nach den Fig. 1 und 2 mit der Öffnung für den Austritt der verflüssigten Legierung,
- Fig. 4 zeigt: schematisch in Draufsicht einen Drucksensor, und
- Fig. 5 zeigt: eine Schnittansicht des Drucksensors von Fig. 4 entlang von deren Linie II-II.

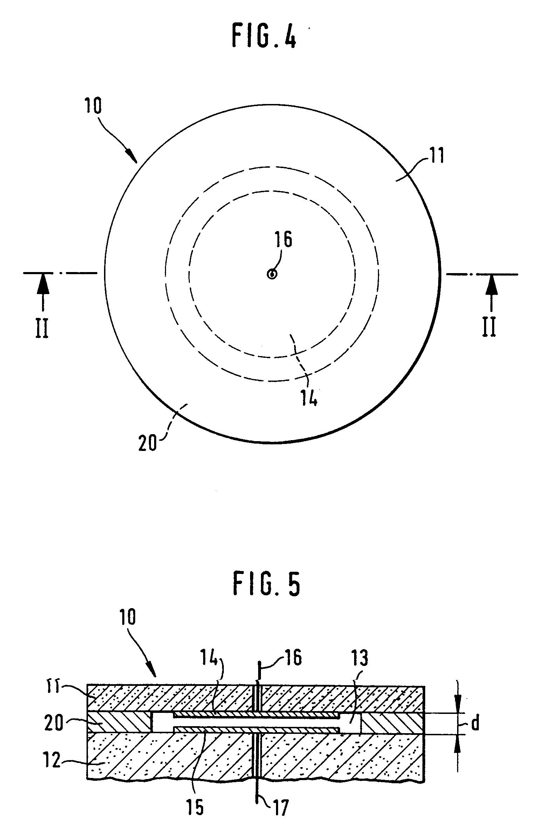

Die perspektivische Fig. 1 zeigt die wesentlichen Einzelheiten einer ersten Variante einer Melt-Spinning-Vorrichtung zum Herstellen von gleichmäßig dicken Ringen 20 (vgl. Fig. 5) aus einer Aktivhartlot-Legierung. Eine Metalltrommel 1 großer Wärmeleitfähigkeit, die in einem Lagerblock 2 drehbar montiert ist, wird von einem nicht dargestellten Motor in Rotation mit hoher Drehgeschwindigkeit versetzt, wie durch den Drehrichtungspfeil angedeutet ist.

Die große Wärmeleitfähigkeit wird z.B. dadurch erreicht, daß die Metalltrommel 1 vollständig aus Kupfer besteht oder daß ihre Seitenflächen zweckmäßigerweise mit Kupfer belegt sind. Auch kann sie von innen mit einer Kühlflüssigkeit, z.B. Wasser, gekühlt sein. Durch diese Ausbildung der Metalltrommel 1 und die hohe Drehgeschwindigkeit lassen sich Abkühlgeschwindigkeiten der flüssigen Legierung in der Größenordnung von 10³ bis 10⁶ °C/s erreichen.

Neben der einen Seitenfläche 1' der Metalltrommel 1 ist ein Tiegel 3 angeordnet, der eine seitliche Öffnung 4 hat, deren Einzelheiten in Fig. 3 gezeigt sind. Die Höhe h der Öffnung 4 ist ungefähr gleich der Materialbreite der Ringe 20. Die Öffnung 4 befindet sich in unmittelbarem seitlichen Abstand neben der Seitenfläche 1' der Metalltrommel 1, der etwa gleich der Dicke der Ringe ist. Ferner weist die Mitte der Öffnung 4 von der Trommelachse M einen radialen Abstand r auf, der etwa dem Durchmesser der Ringe gleich ist.

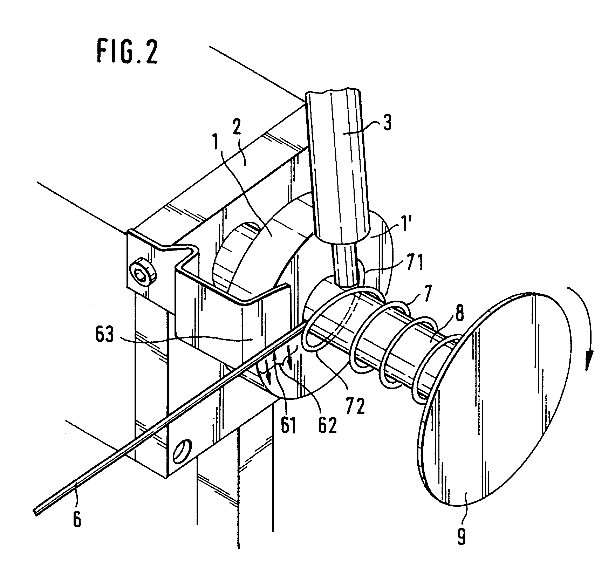

Der Tiegel 3 besteht bevorzugt vollständig aus einem hochwärmebeständigen und gut wärmeleitfähigen, nicht-metallischen Material. Als besonders geeignet haben sich hochdichter Graphit oder Bornitrid erwiesen. Im Tiegel 3 wird das Aktivhartlot-Legierungsmaterial z.B. mittels Hochfrequenzenergie erhitzt und verflüssigt. Hierzu befindet sich der Tiegel 3 z.B. in einer Spule, die in den Fig. 1 und 2 der Übersichtlichkeit halber nicht gezeigt ist.

Ein mechanischer Abweiser 5 mit einer scharfen Kante 51 befindet sich um etwa 90° bis 270° gegenüber der Öffnung 4 des Tiegels 3 versetzt unmittelbar neben der Seitenfläche 1' der Metalltrommel.

Die entstehende Ringwendel 7 wickelt sich von selbst, nämlich aufgrund der ihr von der Metalltrommel 1 eingeprägten Krümmung und der ihr vom Abweiser 5 eingeprägten Steigung, um einen Aufwickeldorn 8, der als seitlich-koaxialer Fortsatz der Metalltrommel 1 ausgebildet ist und einen Endflansch 9 zur Begrenzung der Aufwicklung hat. Der Aufwickeldorn 8 hat einen Durchmesser, der etwas kleiner als der Ringinnendurchmesser ist. Hinter dem Endflansch 9 kann im Bedarfsfall ein weiterer Lagerblock vorgesehen sein.

Die perspektivische Fig. 2 zeigt die wesentlichen Einzelheiten einer zweiten Variante einer Melt-Spinning-Vorrichtung zum Herstellen von gleichmäßig dicken Ringen 20 (vgl. Fig. 5) aus einer Aktivhartlot-Legierung. Diese Variante unterscheidet sich von der der Fig. 1 dadurch, daß anstatt des Abweisers 5 ein gasführendes Rohr 6 vorgesehen ist, das - in Fig. 2 an seiner Unterseite - einen Längsschlitz 61 aufweist, aus dem ein Gas 62, z.B. Luft, Stickstoff oder ein geeignetes Inertgas, tangential zur Seitenfläche 1' der Metalltrommel 1, also deren Drehrichtung entgegen, unter Druck ausströmt. Das Rohr 6 ist an einer Halterung 63 befestigt.

Die entstehende Ringwendel 7 wickelt sich auch bei der Variante der Fig. 2 von selbst aufgrund der ihr von der Metalltrommel 1 eingeprägten Krümmung und der ihr hier vom Gasstrom 62 eingeprägten Steigung, um den Aufwickeldorn 8 mit dem Endflansch 9, die wiederum wie in Fig. 1 ausgebildet sind.

In den Fig. 1 und 2 ist der Teil 71 der Ringwendel 7 zu sehen, der sich auf der Metalltrommel 1 unmittelbar nach Austritt der flüssigen Legierung aus der Öffnung 4 des Tiegels 3 bildet. Nach einem Drehwinkel von ca. 90° bis 270° der Metalltrommel 1, gerechnet von der Öffnung 4 aus, ist der Teil 72 der Ringwendel 7 entstanden, der sich nun von der Metalltrommel 1 zu lösen beginnt. Von der Ringwendel 7 werden die Ringe 20 abgeschnitten.

Die durch das erläuterte Verfahren mittels der beschriebenen Vorrichtung hergestellten Ringe 20 werden bevorzugt bei kapazitiven Drucksensoren eingesetzt. Ein solcher Drucksensor 10 ist in den Fig. 4 und 5 dargestellt. Er hat eine Membran 11 in der Form einer kreisrunden Scheibe mit planparallelen Flächen, die rings um den Umfang mit einem kreisrunden Grundkörper 12 in einem definierten Abstand d zusammengefügt sind, so daß zwischen der ebenen Oberseite des Grundkörpers 12 und der gegenüberliegenden Seite der Membran 11 eine Kammer 13 gebildet ist. Die Membran 11 und der Grundkörper 12 bestehen aus Keramik, z.B. aus Aluminiumoxid-Keramik, vorzugsweise mit einer Reinheit von 96 Gew.%. Die Membran 11 ist elastisch, so daß sie sich unter einem auf sie einwirkenden Druck verformen kann, wodurch sie sich nach der einen oder der anderen Seite durchbiegt. Der Grundkörper 12 kann massiv und starr sein; er kann aber bei Bedarf auch wie die Membran 11 als flache elastische Scheibe ausgebildet sein.

An den einander zugewandten Flächen von Membran 11 und Grundkörper 12 sind innerhalb der Kammer 13 kreisförmige Leiterschichten 14, 15 aus einem geeigneten Metall, z.B. Tantal, angeracht, die sich mit Abstand gegenüberliegen. Mit der Leiterchicht 14 ist ein Anschlußleiter 16 verbunden, der gasdicht, z.B. in Form eines eingelöteten aktivlotumhüllten Drahtes, durch die Membran 11 hindurchgeführt ist. In gleicher Weise ist mit der Leiterschicht 15 ein Anschlußleiter 17 verbunden, der ebenfalls gasdicht nach außen geführt ist.

Die Leiterschichten 14, 15 bilden die Elektroden eines Kondensators, dessen Kapazität vom Abstand der Leiterschichten abhängt, so daß sie sich bei Abstandsänderungen infolge von Druckeinwirkungen ebenfalls ändert. Die Kapazität des Sensors kann mit einer an die Anschlußleiter 16, 17 angeschlossenen elektronischen Schaltung gemessen werden und ist ein Maß für den auf den Sensor einwirkenden Druck.

Der Vollständigkeit halber sei erwähnt, daß es auch Drucksensoren mit mehr als zwei Elektroden gibt. So kann z.B. eine der beiden Flächen zwei konzentrische Elektroden tragen, die zusammen mit der gemeinsamen gegenüberliegenden Elektrode zwei Kondensatoren mit einer gemeinsamen Elektrode bilden, die z.B. als Meß- bzw. als Referenzkondensator verwendet werden können.

Die Besonderheit des dargestellten Drucksensors besteht in der Art und Weise, wie Membran 11 und Grundkörper 12 am Rande zusammengefügt sind. Sie sind dort mittels eines in der oben erläuterten Weise hergestellten Ringes 20 miteinander gasdicht hartverlötet, ohne daß dabei die jeweiligen Flächen von Membran 11 und Grundkörper 12 vorher metallisiert zu werden bräuchten oder ein Flußmittel angewendet werden müßte. Die Dicke des Ringes 20 bestimmt den Abstand d zwischen Membran 11 und Grundkörper 12.

Derartige Drucksensoren sind typische verspannungsempfindliche Bauteile; sie dürfen in einem Temperaturbereich von z.B. -40 °C bis +130 °C keine oder allenfalls eine vernachlässigbare Temperaturhysterese elektrischer Kennwerte haben. Liegen die thermischen Ausdehnungskoeffizienten der Keramik und des Aktivhartlots nicht ausreichend nahe beieinander, so wird das Aktivhartlot während des Betriebs im erwähnten Temperaturbereich plastisch und daher irreversibel verformt, und es kann sogar bereichsweise zum Ausbrechen oder Abreißen der Keramik kommen. Die räumliche Zuordnung der Sensorteile geht dadurch in eine zwar nur geringfügig, aber doch andere Zuordnung über. Diese neue Konfiguration hat aber andere elektrische Kennwerte zur Folge. Da diese den Meßeffekt, z.B. einen zu messenden Druck, repräsentieren, hat der Drucksensor nun eine (unerwünschte) Temperaturhysterese.

Das Aktivhartlot muß zur Vermeidung dieser Temperaturhysterese also einen Temperaturausdehnungskoeffizienten haben, der idealerweise gleich dem der Keramik oder des Einkristalls ist, realerweise also letzterem möglichst nahekommt.

Bei den genannten Drucksensoren kann die hohe statische Festigkeit und Dauerwechsellastfestigkeit des Aktivhartlots auf Zirconium/Nickel-Basis mit Titan ohne weiteres nachgewiesen werden: Im Kriechversuch bei höheren Temperaturen, z.B. 130 °C, und unter Nenndruck bzw. bei Überlastdruckstoßversuchen ergeben sich keine Veränderungen der Sensordaten über lange Versuchszeiten.

## Patentansprüche

1. Verfahren zum Herstellen von gleichmäßig dicken Ringen (20) aus einer Aktivhartlot-Legierung durch Melt-Spinning der flüssigen Legierung mit folgenden Schritten:
- die Legierung wird in einem Tiegel (3) mit einer seitlichen Öffnung (4) verflüssigt, deren Höhe (h) ungefähr gleich der Materialbreite der Ringe ist,
- die flüssige Legierung wird aus dem Tiegel (3) auf die Seitenfläche (1') einer im Abstand von etwa der Dicke der Ringe mit hoher Umfangsgeschwindigkeit rotierenden Metalltrommel (1) großer Wärmeleitfähigkeit in einem etwa dem Durchmesser der Ringe entsprechenden radialen Abstand (r) vom Trommelmittelpunkt (M) ausgepreßt,
- nach etwa einer viertel bis dreiviertel Umdrehung der auf der Metalltrommel (1) zum Ringmaterial erstarrten Aktivhartlot-Legierung wird es durch einen scharfkantigen mechanischen Abweiser (5) oder einen entgegen der Drehrichtung der Metalltrommel (1) auf sie geblasenen Gasstrom (62) von der Metalltrommel (1) abgehoben und am Tiegel (3) vorbeigeführt,
- die entstehende Ringwendel (7) wird um einen als Aufwickeldorn (8) dienenden seitlich-koaxialen Fortsatz der Metalltrommel (1) geführt, der auf der Seite des Tiegels (3) angeordnet ist und einen Endflansch (9) sowie einen Durchmesser aufweist, der etwas kleiner als der Ringinnendurchmesser ist, und
- von der Ringwendel (7) werden die Ringe (20) abgeschnitten.

2. Verfahren nach Anspruch 1, bei dem das Verflüssigen durch Erhitzen des Tiegels (3) mittels Hochfrequenzenergie erfolgt.

3. Verfahren nach Anspruch 1, bei dem die Aktivhartlot-Legierung ein ternäres Aktivhartlot auf der Basis einer aus 70 Atom% bis 85 Atom% Zirconium und 15 Atom% bis 30 Atom% Nickel bestehenden Zirconium/Nickel-Legierung ist, das zusätzlich zur Zirconium/Nickel-Legierung Titan enthält.

4. Verfahren nach Anspruch 3, bei der die Zirconium/Nickel-Legierung eine eutektikumsnahe Zusammensetzung hat.

5. Verfahren nach Anspruch 3, bei der die Zirconium/Nickel-Legierung ihre eutektische Zusammensetzung hat.

6. Melt-Spinning-Vorrichtung zum Herstellen von gleichmäßig dicken Ringen (20) aus einer Aktivhartlot-Legierung mit
- einer mit hoher Umfangsgeschwindigkeit rotierenden Metalltrommel (1) großer Wärmeleitfähigkeit,
- einem eine seitliche Öffnung (4) aufweisenden Tiegel (3), deren Höhe (h) ungefähr der Materialbreite der Ringe entspricht und die im Abstand von etwa der Dicke der Ringe neben der Seitenfläche (1') der Metalltrommel (1) und mit einem etwa dem Durchmesser der Ringe entsprechenden radialen Abstand (r) von der Trommelachse (M) angeordnet ist,
- einem scharfkantigen mechanischen Abweiser (5), der um etwa 90° bis 270° gegenüber der Öffnung (4) des Tiegels (3) versetzt unmittelbar neben der Seitenfläche (1') der Metalltrommel (1) angeordnet ist, und
- einem auf der Seite des Tiegels (3) angeordneten und als Aufwickeldorn (8) für die entstehende Ringwendel (7) dienenden seitlich-koaxialen Fortsatz der Metalltrommel (1), der einen Endflansch (9) und einen Durchmesser aufweist, der etwas kleiner als der Ringinnendurchmesser ist.

7. Melt-Spinning-Vorrichtung zum Herstellen von gleichmäßig dicken Ringen aus einer Aktivhartlot-Legierung mit
- einer mit hoher Umfangsgeschwindigkeit rotierenden Metalltrommel (1) großer Wärmeleitfähigkeit,
- einem eine seitliche Öffnung (4) aufweisenden Tiegel (3), deren Höhe (h) ungefähr der Materialbreite der Ringe entspricht und die im Abstand von etwa der Dicke der Ringe neben der Seitenfläche (1') der Metalltrommel (1) und mit einem etwa dem Durchmesser der Ringe entsprechenden radialen Abstand (r) von der Trommelachse (M) angeordnet ist,
- einem um etwa 90° bis 270° gegenüber der Öffnung (4) des Tiegels (3) versetzt radial und parallel zur Seitenfläche (1') der Metalltrommel (1) verlaufenden gasführenden Rohr (6), das einen Längsschlitz (61) aufweist, aus dem ein Gas tangential entgegen der Drehrichtung der Metalltrommel (1) austritt, und
- einem auf der Seite des Tiegels (3) angeordneten und als Aufwickeldorn (8) für die entstehende Ringwendel (7) dienenden seitlich-koaxialen Fortsatz der Metalltrommel (1), der einen Endflansch (9) und einen Durchmesser aufweist, der etwas kleiner als der Ringinnendurchmesser ist.

8. Vorrichtung nach Anspruch 6 oder 7, bei der der Tiegel (3) vollständig aus einem hochwärmebeständigen und gut wärmeleitfähigen, nicht-metallischen Material, insb. aus hochdichtem Graphit oder Bornitrid besteht.

## Claims

1. A method of forming rings (20) of uniform thickness from an active brasing alloy by melt-spinning the liquid alloy, comprising the following steps:
- The alloy is liquefied in a crucible (3) having a lateral opening (4) whose height (h) is approximately equal to the width of the ring material;
- the liquid alloy is forced out of the crucible (3) onto the side surface (1') of a metal drum (1) of high thermal conductivity at a radial distance (r) from the drum center (M) approximately equal to the ring diameter, said metal drum rotating at a high circumferential velocity at a distance from the crucible approximately equal to the ring thickness;
- after an approximately quarter to three-quarter turn of the active brasing alloy solidified on the metal drum (1) into ring material, the latter is lifted off the metal drum (1) by a sharp-edged mechanical deflector (5) or a gas stream (62) blown onto it in a direction opposite to the direction of rotation of the metal drum, and guided past the crucible (3);
- the ring helix (7) being formed is guided around a lateral, coaxial extension of the metal drum (1) which is located on one side of the crucible (3), serves as a winding mandrel (8), and has an end flange (9) and a diameter slightly smaller than inner diameter of the rings, and
- from the ring helix, the rings (20) are cut off.

2. A method as claimed in claim 1 wherein the liquefying is accomplished by heating the crucible by means of high-frequency energy.

3. A method as claimed in claim 1 wherein the active brazing alloy is a ternary active brazing alloy based on a zirconium-nickel alloy composed of 70 atom% to 85 atom% zirconium and 15 atom% to 30 atom% nickel, and contains titanium in addition to the zirconium-nickel alloy.

4. A method as claimed in claim 3 wherein the zirconium-nickel alloy has a near-eutectic composition.

5. A method as claimed in claim 3 wherein the zirconium-nickel alloy has its eutectic composition.

6. A melt-spinning apparatus for forming rings (20) of uniform thickness from an active brazing alloy, comprising
- a metal drum (1) of high thermal conductivity rotating at a high circumferential velocity,
- a crucible (3) having a lateral opening (4) whose height (4) is approximately equal to the width of the ring material and which is located adjacent to the side surface (1') of the metal drum (1) at a distance approximately equal to the ring thickness and at a radial distance (r) from the drum axis (M) approximately equal to the ring diameter,
- a sharp-edged mechanical deflector (5) extending immediately adjacent to the side surface (1') of the metal drum (1) at an angle of 90° to 270° with respect to the opening (4) of the crucible, and
- a lateral, coaxial extension of the metal drum which is located on the side of the crucible (3), serves as a winding mandrel (8) for the ring helix (7) being formed, and has an end flange (9) and a diameter slightly smaller than the inner diameter of the rings.

7. A melt-spinning apparatus for forming rings of uniform thickness from an active brazing alloy, comprising
- a metal drum (1) of high thermal conductivity rotating at a high circumferential velocity,
- a crucible (3) having a lateral opening (4) whose height (4) is approximately equal to the width of the ring material and which is located adjacent to the side surface (1') of the metal drum (1) at a distance approximately equal to the ring thickness and at a radial distance (r) from the drum axis (M) approximately equal to the ring diameter,
- a gas-conducting tube (6) extending radially and parallel to the side surface (1') of the metal drum (1) at an angle of 90° to 270° with respect to the opening (4) of the crucible (3) and having a longitudial slot (61) from which a gas issues tangentially in a direction opposite to the direction of rotation of the metal drum (1), and
- a lateral, coaxial extension of the metal drum which is located on the side of the crucible (3), serves as a winding mandrel (8) for the ring helix (7) being formed, and has an end flange (9) and a diameter slightly smaller than the inner diameter of the rings.

8. An apparatus as claimed in claim 6 or 7 wherein the crucible (3) is made completely of a high-temperature and highly thermally conductive, nonmetallic material, particularly of high-density graphite or boron nitride.

## Revendications

1. Procédé de fabrication d'un anneau d'épaisseur régulière (20) composé d'un alliage actif de métal d'apport de brasage fort par filature en fusion de l'alliage liquéfié conformément aux étapes suivantes :
- l'alliage est liquéfié dans un creuset (3) pourvu d'une ouverture latérale (4) dont la hauteur (h) correspond approximativement à la largeur de l'anneau,
- l'alliage liquéfié est pressé hors du creuset (3) sur la surface latérale (1') d'un tambour métallique (1) de conductibilité thermique élevée et tournant à une vitesse circonférentielle élevée à une distance correspondant plus ou moins à l'épaisseur de l'anneau et à une distance radiale (r) du point central (M) du tambour correspondant plus ou moins au diamètre de l'anneau,
- après environ 1/4 à 3/4 de rotation de l'alliage actif de métal d'apport de brasage fort solidifié sur le tambour métallique (1) le métal est enlevé du tambour soit par un déflecteur mécanique (5) pourvu d'un bord vif où par un flux de gaz (62) soufflé sur l'alliage dans le sens contraire au sens de rotation du tambour (1). Le métal enlevé est ensuite guidé au-delà du creuset,
- la spirale ainsi formée (7) est guidée autour d'un prolongement latéral coaxial du tambour métallique (1) servant de broche d'enroulement, ledit prolongement étant disposé du côté du creuset (3) et présentant une flasque d'extrémité (9) ainsi qu'un diamètre légèrement inférieur au diamètre interne de l'anneau, et
- les anneaux (20) sont découpés de la spirale (7).

2. Procédé selon la revendication 1, dans le cadre duquel la liquéfaction se produit par échauffement du creuset (3) au moyen d'une énergie haute fréquence.

3. Procédé selon la revendication 1, lors duquel l'alliage actif de métal d'apport de brasage est un alliage ternaire actif de métal d'apport de brasage dont la base se compose de 70% d'atomes à 85% d'atomes de zirconium et de 15% d'atomes à 30% d'atomes de Nickel, cet alliage étant composé de titane en plus de l'alliage zirconium/nickel.

4. Procédé selon la revendication 3, dans le cadre duquel l'alliage de zirconium et de nickel présente une structure presque eutectique.

5. procédé selon la revendication 3, dans le cadre duquel l'alliage de zirconium et de nickel présente une structure eutectique.

6. Dispositif de filature destiné à fabriquer des anneaux (20) d'épaisseur régulière et composés d'un alliage actif de métal d'apport de brasage, ledit dispositif :
- comportant un tambour métallique (1) ayant une conductibilité thermique élevée et tournant à une vitesse circonférentielle élevée;
- comportant un creuset (3) présentant une ouverture latérale (4) dont la hauteur correspond plus ou moins à la largeur matérielle de l'anneau et qui est disposé à côté de la surface latérale (1') du tambour métallique (1) à une distance correspondant plus ou moins à l'épaisseur de l'anneau et à une distance radiale (r) de l'axe du tambour (M) correspondant environ au diamètre de l'anneau, et
- comportant un déflecteur (5) mécanique à bords vifs, lequel est disposé directement à côté de la surface frontale (1') du tambour métallique (1) en étant décalé de 90 à 270° par rapport à l'ouverture (4) du creuset (3), et
- comportant un prolongement latéral coaxial du tambour métallique (1) disposé du côté du creuset (3) et servant de broche d'enroulement (8) pour la spirale (7) apparaissant, ce prolongement présentant une flasque d'extrémité (9) et un diamètre légèrement inférieur au diamètre interne de l'anneau.

7. Dispositif de filature en fusion destiné à fabriquer des anneaux (20) d'épaisseur régulière et composés d'un alliage actif de métal d'apport de brasage, ledit dispositif
- comportant un tambour métallique (1) ayant une conductibilité thermique élevée et tournant à une vitesse circonférentielle élevée,
- comportant un creuset (3) présentant une ouverture latérale (4) dont la hauteur correspond plus ou moins à la largeur matérielle de l'anneau et qui est disposé à côté de la surface latérale (1') du tambour métallique (1) à une distance correspondant plus ou moins à l'épaisseur de l'anneau et à une distance radiale (r) de l'axe du tambour (M) correspondant environ au diamètre de l'anneau, et
- comportant un tuyau conducteur de gaz (6) dirigé radialement et parallèlement à la face latérale (1') du tambour métallique (1) et décalé d'environ 90 à 270° par rapport à l'ouverture (4) du creuset (3), ce tuyau présentant une fente longitudinale (61) par laquelle s'échappe un gaz de manière tangentielle par rapport à la direction de rotation du tambour métallique (1), et
- comportant un prolongement latéral coaxial du tambour métallique (1) disposé du côté du creuset (3) et servant de broche d'enroulement (8) pour la spirale (7) apparaissant, ce prolongement présentant une flasque d'extrémité (9) et un diamètre légèrement inférieur au diamètre interne de l'anneau.

8. Dispositif selon l'une ou l'autre des revendications 6 et 7, dans le cadre duquel le creuset (3) se compose entièrement d'un matériau résistant à la chaleur, bon conducteur et non-métallique, en particulier de graphite ou de nitrure de bore à densité élevée.
